# EUROPEAN PATENT APPLICATION

(11) **EP 4 667 358 A1**
(43) Date of publication of application: **24.12.2025**
(21) Application number: 25183592.2
(22) Date of filing: 18.06.2025
(51) Int. Cl.: B64D 9/00, B64F 5/50, B64F 5/10

(54) **LIFT SYSTEMS AND METHODS**

(30) Priority: 21.06.2024 US 202418750767
(71) Applicant: The Boeing Company, Arlington, VA 22202 (US)
(72) Inventor: Doran, Joseph Leo, Arlington, 22202 (US); Cook, Anthony Stephen, Arlington, 22202 (US); Lopez, III, Agustin, Arlington, 22202 (US); Hardy, Everett Michael, Arlington, 22202 (US)
(74) Representative: Arnold & Siedsma

(57) **Abstract**

A lift system (100) and method include a first clamp assembly (102), a second clamp assembly (104), and a gear assembly (106) including one or more gears. The lift system (100) includes a lift housing (108) having a housing cavity (140) with a spool assembly (110) disposed within the housing cavity (140). The spool assembly (110) is coupled with the gear assembly (106) that controls a direction of rotation of the spool assembly (110). A first strap (112) extends between a first end (116) coupled with the first clamp assembly (102) and a second end (118) coupled with the spool assembly (110). A second strap (114) extends between a third end (120) coupled with the second clamp assembly (104) and a fourth end (122) coupled with the spool assembly (110). The lift housing (108) moves in a first direction (130) responsive to the spool assembly (110) rotating in a first direction of rotation (174), and the lift housing (108) moves in a second direction (132) responsive to the spool assembly (110) rotating in a second direction of rotation (176).

## Description

### FIELD OF THE DISCLOSURE

Examples of the present disclosure generally relate to lift systems and methods for operating a lift system, such as to move objects.

### BACKGROUND OF THE DISCLOSURE

An aircraft may include several bundles of wires that may extend between different regions of the aircraft to electrically couple several electronic systems of the aircraft together. The wire bundles may extend lengths that are about 3.66 m (12 feet) to about 7.62 m (25 feet) long, and each wire bundle may weigh between about 113.40 kg (250lb) and about 340.19 kg (750lb).

In certain aircrafts, such as commercial airplanes, the wire bundles may be positioned and extend within compartments that are below a floor of the interior cabin of the aircraft. The wire bundles may be installed in elevated positions within the compartments of the aircraft by being coupled with floor beams associated with the floor of the interior cabin.

In order to install the wire bundles within the floor beams of the aircraft, one or more operators may manually lift the wire bundles and hold the wire bundles in elevated positions while another operator completes the installation process. As can be appreciated, however, this manual process of installing and/or removing wire bundles from an aircraft subjects the operators to dangerous operating conditions, causing physical pain and/or ergonomic issues to the operators completing the manual work, requires that the operators to be physically capable of completing the work, and requires multiple operators to complete the installation process of the wire bundles.

### SUMMARY OF THE DISCLOSURE

A need exists for a system that can change a vertical position of one or more objects, such as wire bundles that are disposed within an aircraft.

With those needs in mind, certain examples of the present disclosure provide a lift system and method including a first clamp assembly and a second clamp assembly. The first clamp assembly may be coupled, preferably operably coupled, with a first structure and the second clamp assembly may be coupled, preferably operably coupled, with a second structure. The lift system includes a gear assembly that may include one or more gears disposed within a gear housing. The lift system may also include a lift housing having plural surfaces defining a housing cavity with a spool assembly disposed within the housing cavity. The spool assembly may be operably coupled with the one or more gears of the gear assembly. The gear assembly may control a direction of rotation of the spool assembly. A first strap extends between a first end operably coupled with the first clamp assembly and a second end operably coupled with the spool assembly. A second strap extends between a third end operably coupled with the second clamp assembly and a fourth end operably coupled with the spool assembly. The lift housing may move in a first direction responsive to the spool assembly rotating in a first direction of rotation, and the lift housing may move in a second direction responsive to the spool assembly rotating in a second direction of rotation. In one example, the lift housing may move an object that is operably coupled with the lift housing in the first and/or second directions.

In one example, the spool assembly may include a rotating extension component that may rotate in the first direction of rotation or the second direction of rotation. The second end of the first strap and the fourth end of the second strap may be operably coupled with the rotating extension component. In one example, a portion of the first strap and a portion of the second strap may wrap around an outer surface of the rotating extension component responsive to the spool assembly rotating in the first direction of rotation. In another example, a portion of the first strap and a portion of the second strap may unwrap from and move away from the rotating extension component responsive to the spool assembly rotating in the second direction of rotation.

In one example, the gear assembly may include an attachment portion extending a distance away from the gear housing, and the one or more gears may be configured to be actuated responsive to actuation of the attachment portion.

In one example, the gear assembly may control a speed of rotation of the spool assembly, and may additionally or alternatively control the direction of rotation of the spool assembly. In another example, the lift housing may include a cover that extends over at least a portion of the housing cavity.

In one example, the lift housing may extend between a first end and a second end. The lift housing may include a first roller that is positioned proximate the first end of the lift housing and a second roller that is positioned proximate the second end of the lift housing. The first strap may extend around a portion of the first roller of the lift housing between the first and second ends of the first strap. The second strap may extend around a portion of the second roller between the third and fourth ends of the second strap.

In one example, the first end of the first strap may be detachably coupled with the first clamp assembly, and the third end of the second strap may be detachably coupled with the second clamp assembly. In another example, the first structure and the second structure may be positioned within an aircraft. The lift housing may move in the first direction toward the surface of the aircraft or in the second direction away from the surface of the aircraft. For example, the lift housing may move an object towards and/or away from the surface of the aircraft.

Certain examples of the present disclosure provide a method that includes moving a lift housing of a lift system in a first direction responsive to rotating a spool assembly in a first direction of rotation. The spool assembly may be disposed within the lift housing. The lift system includes a first strap that extends between a first end that is operably coupled with a first clamp assembly and a second end that is operably coupled with the spool assembly. The lift system also includes a second strap that extends between a third end that is operably coupled with a second clamp assembly and a fourth end that is operably coupled with the spool assembly. The method may include moving the lift housing of the lift assembly in a second direction responsive to rotating the spool assembly in a second direction of rotation.

The method may further comprise controlling one or more of a direction of rotation of the spool assembly or a speed of rotation of the spool assembly via a gear assembly operably coupled with the spool assembly.

The method may further comprise rotating a rotating extension component of the spool assembly in the first direction of rotation or the second direction of rotation, and the second end of the first strap and the fourth end of the second strap may be operably coupled with the rotating extension component. The method may further comprise wrapping a portion of the first strap and wrapping a portion of the second strap around an outer surface of the rotating extension component responsive to the spool assembly rotating in the first direction of rotation. The method may further comprise unwrapping a portion of the first strap and unwrapping a portion of the second strap from the outer surface of the rotating extension component responsive to the spool assembly rotating in the second direction of rotation.

The method may further comprise detachably coupling the first end of the first strap with a first clamp assembly, and may comprise detachably coupling the third end of the second strap with a second clamp assembly. The method may further comprise coupling the first clamp assembly with a first structure of an aircraft, coupling the second clamp assembly with a second structure of an aircraft, and one or more of moving an object toward a surface of the aircraft responsive to the lift housing moving in the first direction or moving the object away from the surface of the aircraft responsive to the lift housing moving in the second direction.

Certain examples of the present disclosure provide a lift system that includes a lift housing having plural surfaces that define a housing cavity, and a spool assembly that is disposed within the housing cavity of the lift housing. The spool assembly includes a rotating extension component that rotates in a first direction of rotation or a second direction of rotation. The spool assembly is operably coupled with a gear assembly that controls a direction of rotation of the rotating extension component and/or a speed of rotation of the rotating extension component. The lift system includes a first strap that extends between a first end that is operably coupled with a first clamp assembly and a second end that is operably coupled with the rotating extension component of the spool assembly. The lift system also includes a second strap that extends between a third end that is operably coupled with a second clamp assembly and a fourth end that is operably coupled with the rotating extension component of the spool assembly. The first clamp assembly may be operably coupled with a first structure and the second clamp assembly may be operably coupled with a second structure. The lift housing may move in a first direction toward the first and second structures responsive to the rotating extension component of the spool assembly rotating in the first direction of rotation. A portion of the first strap and a portion of the second strap wrap around an outer surface of the rotating extension component responsive to the rotating extension component rotating in the first direction of rotation. Alternatively or additionally, the lift housing may move in a second direction away from the first and second structures responsive to the rotating extension component of the spool assembly rotating in the second direction of rotation. The portion of the first strap and the portion of the second strap may unwrap from the rotating extension component responsive to the rotating extension component rotating in the second direction of rotation.

### BRIEF DESCRIPTION OF THE DRAWINGS

Figure 1 illustrates a perspective view of a lift system, according to an example of the present disclosure.
Figure 2 illustrates a magnified view of a portion of the lift system shown in Figure 1, according to an example of the present disclosure.
Figure 3 illustrates a cross-sectional view of a portion of the lift system shown in Figure 1, according to an example of the present disclosure.
Figure 4 illustrates a portion of the lift system shown in Figure 2, according to an example of the present disclosure.
Figure 5 illustrates a perspective partial view of a spool assembly of the lift system shown in Figure 1, according to an example of the present disclosure.
Figure 6 illustrates a first arrangement of a clamp assembly of a lift system, according to an example of the present disclosure.
Figure 7 illustrates a second arrangement of a clamp assembly of a lift system, according to an example of the present disclosure.
Figure 8 illustrates a flowchart of a method, according to an example of the present disclosure.
Figure 9 illustrates a front view of a lift system, according to an example of the present disclosure.
Figure 10 illustrates a perspective view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide lift systems and methods for controlling operation of the lift systems. In one example, the lift system may include a gear assembly and a spool assembly that is operably coupled with the gear assembly. The lift system may also include one or more straps that may extend between clamp assemblies and the spool assembly. The gear assembly may control operation of the spool assembly to rotate in a first direction of rotation or a second direction of rotation. Responsive to rotating the spool assembly in the first direction of rotation, a lift housing may move in a first linear direction. Alternatively, responsive to rotating the spool assembly in the second direction of rotation, the lift housing may move in a second linear direction that is opposite the first linear direction. In one example, the lift system may be used to change a vertical position or vertical elevation of an object. For example, an object may be positioned on a top of the lift housing, and the lift housing may move the object to one or more different vertical positions (e.g., raise the object, lower the object, etc.).

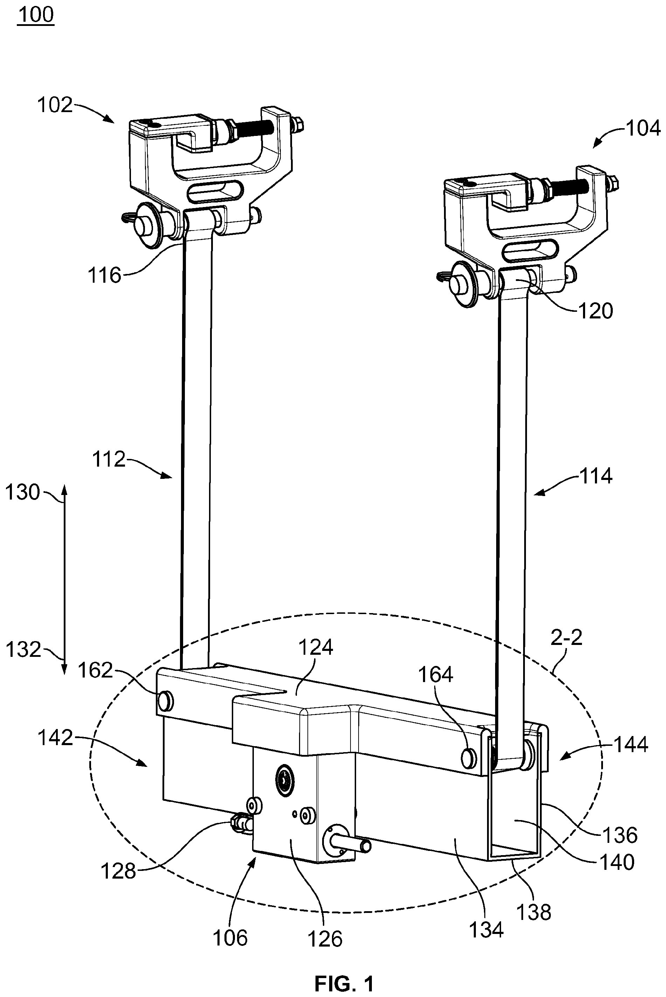

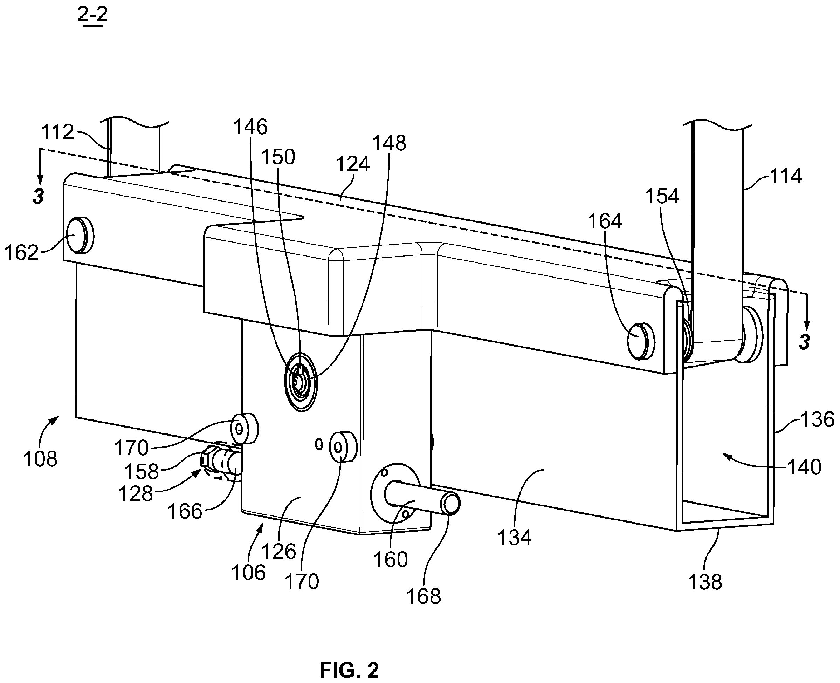

Figure 1 illustrates a perspective view of a lift system 100 and Figure 2 illustrates a magnified view of a portion of the lift system 100, according to an example of the present disclosure. The lift system 100 includes a lift housing 108 that includes a first surface 134, a second surface 136 that is opposite the first surface 134, and a third surface 138 that is coupled with and extends between the first and second surfaces 134, 136. In the illustrated example, the first, second, and third surfaces 134, 136, 138 of the lift housing 108 are formed as a unitary structure or single component, but in alternative examples might be formed as separate and independent components that may be coupled together (e.g., via welding, fasteners, etc.).

The first, second, and third surfaces 134, 136, 138 of the lift housing 108 define a housing cavity 140. In the illustrated example, the lift housing 108 extends between a first end 142 and a second end 144. In one or more examples, a distance between the first and second ends 142, 144 of the lift housing 108 may be about 12 inches (in), about 18in, about 24in, about 36in, or the like. The lift system 100 includes a cover 124 that extends over and covers at least a portion of the housing cavity 140.

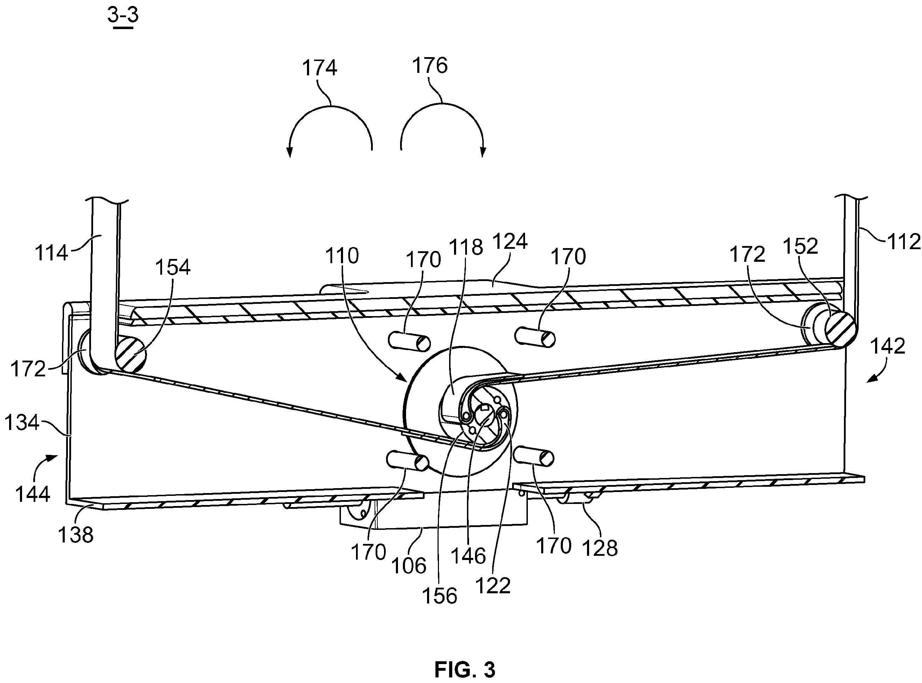

The lift system 100 includes a first strap 112 and a second strap 114. In one or more examples, the first and second straps 112, 114 may be manufactured of a fabric or other flexible material. As one example, the first and second straps 112, 114 may be manufactured of a material that is allowed to bend, flex, or the like, and a material that may control an amount of stretch that the straps are capable of achieving. The first strap 112 extends between a first end 116 that is operably coupled with a first clamp assembly 102 and a second end 118 (shown in Figure 3). The second strap 114 extends between a third end 120 that is operably coupled with a second clamp assembly 104 and a fourth end 122 (shown in Figure 3). The first clamp assembly 102 may be coupled with a first structure (not shown) and the second clamp assembly 104 may be coupled with a second structure (not shown). For example, the first and second clamp assemblies 102, 104 may couple the lift system 100 with one or more structures and the first and second straps 112, 114 may allow the lift housing 108 to be positioned and/or suspended at a vertical position that is below a position of the first and second clamp assemblies 102, 104. The lift housing 108 may move in a first direction 130 toward the clamp assemblies 102, 104, or in a second direction 132 away from the clamp assemblies 102, 104. In one example, the first direction 130 can represent an upward direction and the second direction 132 can represent a downward direction. Moving the lift housing 108 in the first and second directions 130, 132 (e.g., upward and downward) changes a vertical position of the lift housing 108, such as relative to the structures to which the clamp assemblies 102, 104 are coupled, to another surface or structure, or the like.

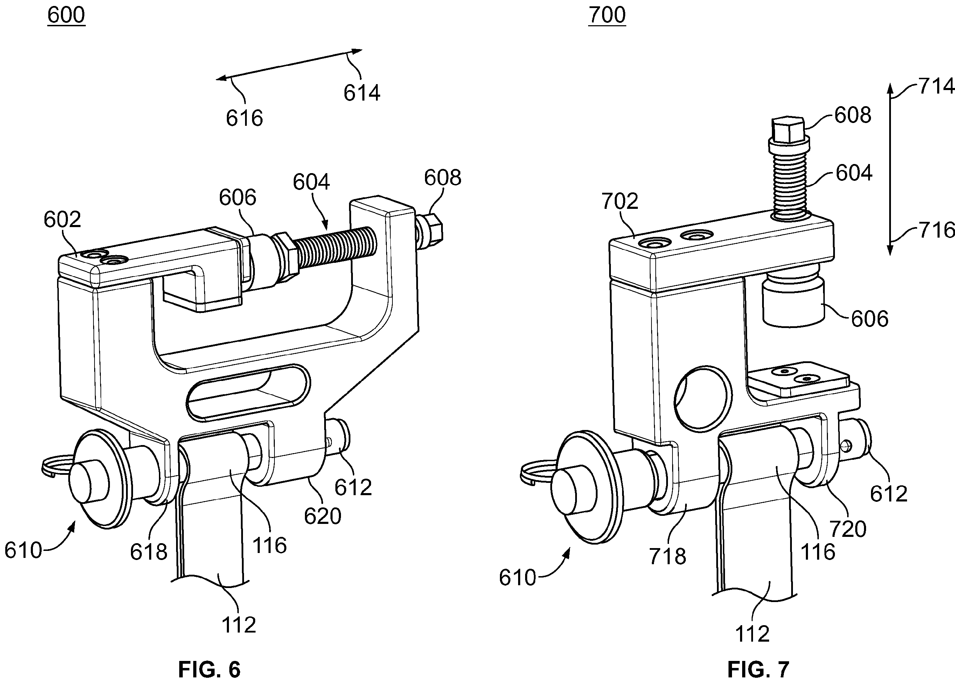

Figure 6 illustrates a perspective view of a clamp assembly (e.g., the first and/or second clamp assemblies) in a first arrangement 600. The first arrangement 600 of the clamp assembly may be referred to as a horizontal clamping arrangement. The clamp assembly includes a first clamp body 602 and an adjustable element 604 that extends through a passage of the first clamp body 602. The adjustable element 604 extends between a mating end 606 and an actuating end 608. The structure (not shown) to which the clamp assembly may be coupled may be positioned between the first clamp body 602 and the mating end 606 of the adjustable element 604. The adjustable element 604 may move in a first opening direction 614 or a first closing direction 616 responsive to actuation of the actuating end 608 of the adjustable element 604 being actuated.

Alternatively, Figure 7 illustrates a perspective view of a clamp assembly (e.g., the first and/or second clamp assemblies) in a second arrangement 700. The second arrangement 700 may be referred to as a vertical clamping arrangement. The clamp assembly includes a second clamp body 702 and the adjustable element 604 that extends through a passage of the second clamp body 702. The adjustable element 604 moves in a second opening direction 714 or a second closing direction 716 responsive to actuation of the actuating end 608 of the adjustable element 604 being actuated. For example, the second opening and closing directions 714, 716 of the clamp assembly having the second arrangement 700 are substantially perpendicular with the first opening and closing directions 614, 616 of the clamp assembly having the first arrangement 600.

The first clamp body 602 in the first arrangement 600 includes first and second coupling tabs 618, 620 that extend away from the first clamp body 602. The first and second coupling tabs 618, 620 include passages that are concentric and are axially aligned with each other. Similarly, the second clamp body 702 of the second arrangement 700 includes first and second coupling tabs 718, 720 that extend away from the second clamp body 702. The first and second coupling tabs 718, 720 include passages that are concentric and are axially aligned with each other.

The clamp assemblies in the first and second arrangements 600, 700 include a strap coupling device 610 that includes an extension portion 612 that extends through passages of the of the first and second coupling tabs 618, 620, 718, 720 of the first and second clamp bodies 602, 702, respectively. The first end 116 of the first strap 112 includes a receiving pocket through which the extension portion 612 also extends. The first end 116 of the first strap 112 is positioned between the first and second coupling tabs 618, 620 of the first clamp body 602, and between the first and second coupling tabs 718, 720 of the second clamp body 702. The strap coupling device 610 may be coupled to and decoupled from the first and second clamp bodies 602, 702. For example, the strap coupling device 610 allows the first and second straps to be detachably coupled with the first and second clamp assemblies 102, 104.

In one example, the lift system 100 may include the first clamp assembly 102 having the first arrangement 600 shown in Figure 6 and the second clamp assembly 104 having the second arrangement 700 shown in Figure 7. For example, the structure (not shown) to which the first clamp assembly 102 is coupled may require the first clamp assembly 102 to have a horizontal clamping arrangement, and the structure (not shown) to which the second clamp assembly 104 is coupled may require the second clamp assembly 104 to have a vertical clamping arrangement. Optionally, both the first and second clamp assemblies 102, 104 may have clamp bodies in the horizontal clamping arrangement, or both the first and second clamp assemblies may have clamp bodies in the vertical clamping arrangement.

Returning to Figures 1 and 2, the lift system 100 includes a gear assembly 106. The gear assembly 106 includes a gear housing 126 that includes plural surfaces defining a gear cavity (not shown) with one or more gears (not shown) disposed therein. In the illustrated example, the gear housing 126 is operably coupled with the first surface 134 of the lift housing via plural fasteners 170, but in alternative examples the gear housing 126 may be coupled with the lift housing 108 at another location of the lift housing 108 and/or via an alternative coupling mechanism and/or arrangement. In the illustrated example, the cover 124 of the lift housing 108 also covers a portion of the gear housing 126, but in alternative examples, the cover 124 may have an alternative shape and/or size such that the cover 124 may cover a different portion of the gear housing 126 or may not cover the gear housing 126.

The gear assembly 106 includes a gear shaft 160 that extends between a first end 166 and a second end 168 through the gear housing 126. The first end 166 of the gear shaft 160 includes an attachment portion 128 including a nut 158. The attachment portion 128 may be coupled with an actuating device (not shown) that may control rotational movement of the gear shaft 160, thereby controlling operation of the one or more gears (not shown) disposed within the gear housing 126.

In one example, the nut 158 of the gear shaft 160 may be the same or substantially the same as a nut positioned at the actuating end 608 of the adjustable element 604 of the first and second clamp assemblies 102, 104. For example, a single actuating device (e.g., a wrench, drill, or the like) may be capable of coupling and decoupling the first and second clamp assemblies 102, 104 with the structures (not shown) and controlling operation of the gear shaft 160 of the gear assembly 106. In one or more examples, an operator may actuate the adjustable elements 604 of the first and second clamp assemblies 102, 104 to couple or decouple the clamp assemblies 102, 104 with structures, and the operator may actuate the attachment portion 128 of the gear shaft 160 using a single actuating device (e.g., a wrench, an electric drill, or the like).

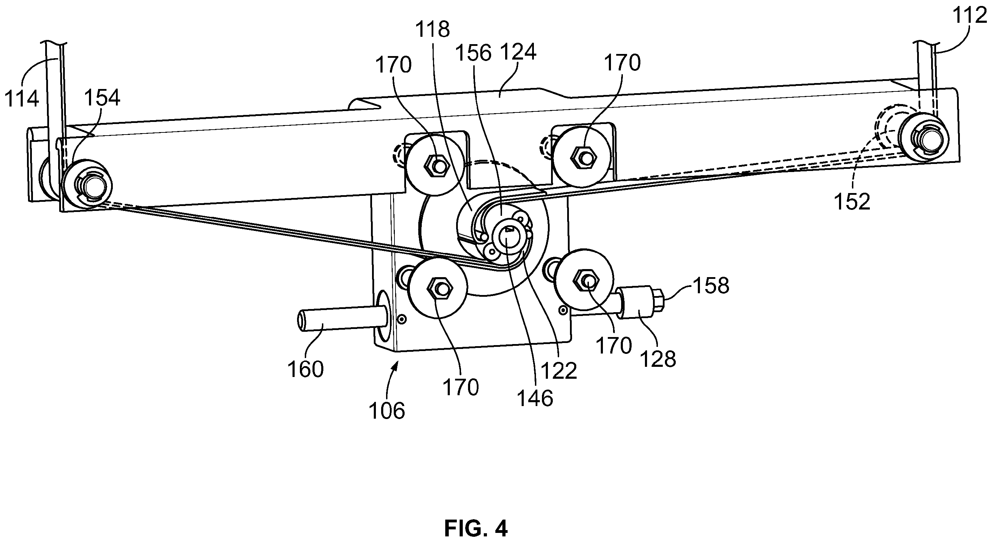

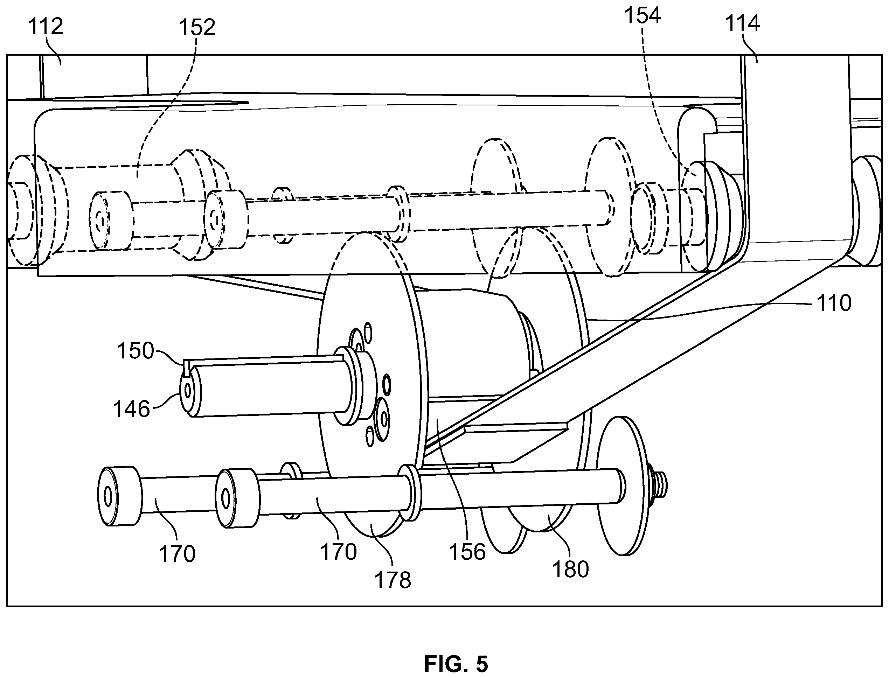

Figure 3 illustrates a cross-sectional view of a portion of the lift system 100, Figure 4 illustrates a portion of the lift system 100, and Figure 5 illustrates a perspective partial view of a spool assembly 110 of the lift system 100, according to an example of the present disclosure. The lift housing 108 is hidden from view in the illustrated example shown in Figure 4, and the lift housing 108 and the gear assembly 106 are hidden from view in the illustrated example shown in Figure 5.

In the illustrated example, the lift system 100 includes a spool assembly 110 that is disposed within the housing cavity 140 of the lift housing 108. The spool assembly 110 includes a spool coupling rod 146 that is coupled with a rotating extension component 156 of the spool assembly 110. The rotating extension component 156 extends between a first plate 178 that is operably coupled with the first surface 134 of the lift housing 108 and a second plate 180 that is operably coupled with the second surface 136 of the lift housing 108. The spool coupling rod 146 operably couples the rotating extension component 156 with the one or more gears disposed within the gear housing 126. Referring to Figures 2 and 5, the spool coupling rod 146 extends through the gear housing 126 and through a gear housing passage 148 thereby coupling the spool assembly 110 with the gear assembly 106. In the illustrated example, the spool coupling rod 146 is operably coupled with the gear housing 126 and the one or more gears via a coupling element 150, which may represent a key or an alternative coupling mechanism.

The lift housing 108 includes a first roller 152 that is disposed within the housing cavity 140 and is positioned proximate the first end 142 of the lift housing, and a second roller 154 that is disposed within the housing cavity 140 and is positioned proximate the second end 144 of the lift housing. In the illustrated example, the cover 124 of the lift housing 108 includes a recess positioned above each of the first and second rollers 152, 154 through which the first and second straps 112, 114, respectively, extend. The first roller 152 is operably coupled with the first and second surfaces 134, 136 and the cover 124 via a first mounting component 162 (shown in Figure 2), and the second roller 154 is operably coupled with the first and second surfaces 134, 136 and the cover 124 via a second mounting component 164. The first and second mounting components 162, 164 may represent bolts, nuts, screws, nails, or any alternative coupling mechanism.

The first strap 112 is positioned to extend around a portion of an exterior surface of the first roller 152 between the first and second ends 116, 118 of the first strap 112. The second strap 114 is be positioned to extend around a portion of an exterior surface of the second roller 154 between the third and fourth ends 120, 122 of the second strap 114. In the illustrated example, the first and second rollers 152, 154 extend between the first surface 134 and the second surface 136 of the lift housing 108. In alternative examples, the lift housing 108 may include two or more rollers positioned to control positions of the first and/or second straps 112, 114, within the housing cavity 140, or the like. In the illustrated example, the first and second rollers 152, 154 include chamfers 172 that may control a position of the first and second straps 112, 114, respectively, around the exterior perimeters of the rollers between the first and second surfaces 134, 136 of the lift housing 108. For example, the chamfers 172 may control a position of the first and second straps 112, 114 to be positioned substantially centered between the first and second surfaces 134, 136 of the lift housing 108.

The first and second straps 112, 114 are coupled with the spool assembly 110 within the housing cavity 140. For example, the second end 118 of the first strap 112 is coupled with an exterior surface of the rotating extension component 156 and the fourth end 122 of the second strap 114 is coupled with the exterior surface of the rotating extension component 156. In the illustrated example, the second end 118 of the first strap 112 and the fourth end 122 of the second strap 114 are positioned so that they wrap around different exterior portions of the rotating extension component 156. For example, in the illustrated example, the first strap 112 extends over and around a top portion of the rotating extension component 156 and the second strap 114 extends under and around a bottom portion of the rotating extension component 156.

The gear assembly 106 may control operation of the spool assembly 110 to control a direction of rotation and/or a rotational speed of the rotating extension component 156 of the spool assembly 110. For example, an actuating device (not shown) may be coupled with the attachment portion 128 of the gear assembly 106 to rotate the gear shaft 160 in a first direction of rotation or a second direction of rotation. Responsive to the actuation of the gear shaft, the one or more gears (not shown) disposed within the gear housing 126 may control a direction and/or speed of rotation of the rotating extension component 156 between a first direction of rotation 174 or a second direction of rotation 176.

Responsive to the rotating extension component 156 rotating in the first direction of rotation 174, a portion of the first strap 112 and a portion of the second strap 114 will wrap around the perimeter surface of the rotating extension component 156. Wrapping the first and second straps 112, 114 around the rotating extension component 156 thereby causes the lift housing 108 to move in the first direction 130 toward the first and second clamp assemblies 102, 104. For example, a length of the first and second straps 112, 114 between the first and second clamp assemblies 102, 104 and the lift housing 108 will decrease and/or shorten responsive to rotating the rotating extension component in the first direction of rotation 174.

Alternatively, responsive to the rotating extension component 156 rotating in the second direction of rotation 176, a portion of the first strap 112 and a portion of the second strap 114 will unwrap from and move away from the perimeter surface of the rotating extension component 156. Unwrapping the first and second straps 112, 114 from the rotating extension component 156 causes the lift housing 108 to move in the second direction 132 away from the first and second clamp assemblies 102, 104. For example, a length of the first and second straps 112, 114 between the first and second clamp assemblies 102, 104 and the lift housing 108 will increase and/or get longer responsive to rotating the rotating extension component in the second direction of rotation 176.

The arrangement of the first and second straps 112, 114 being coupled with the rotating extension component 156 allows the lift housing 108 to move in the first and second directions 130, 132 while the lift housing 108 remains substantially level. For example, the first end 142 of the lift housing 108 and the second end 144 of the lift housing 108 remain substantially aligned with each other while the lift housing 108 moves in the first and second directions 130, 132. Additionally, the lift housing 108 is arranged and positioned such that the cover 124 of the lift housing 108 is aligned to be substantially perpendicular with the linear direction of movement of the lift housing 108 in the first and second directions 130, 132.

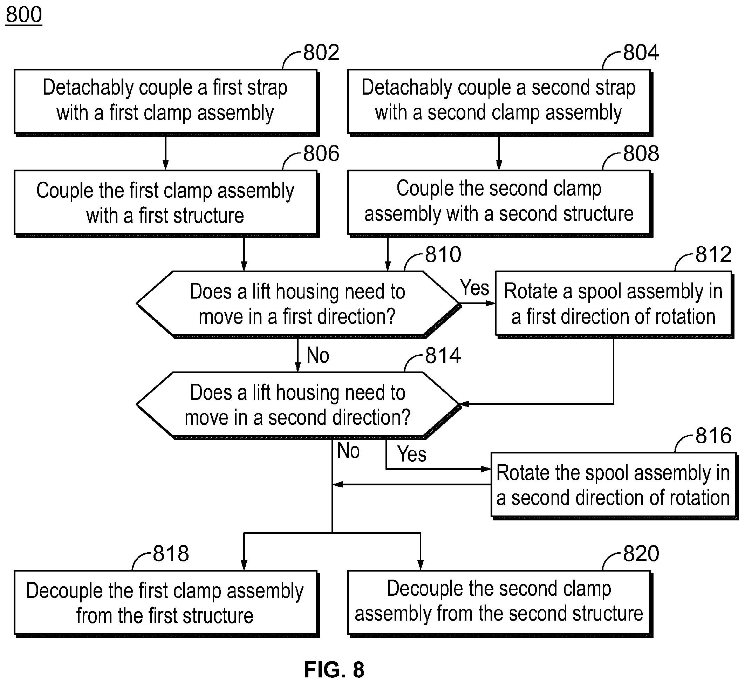

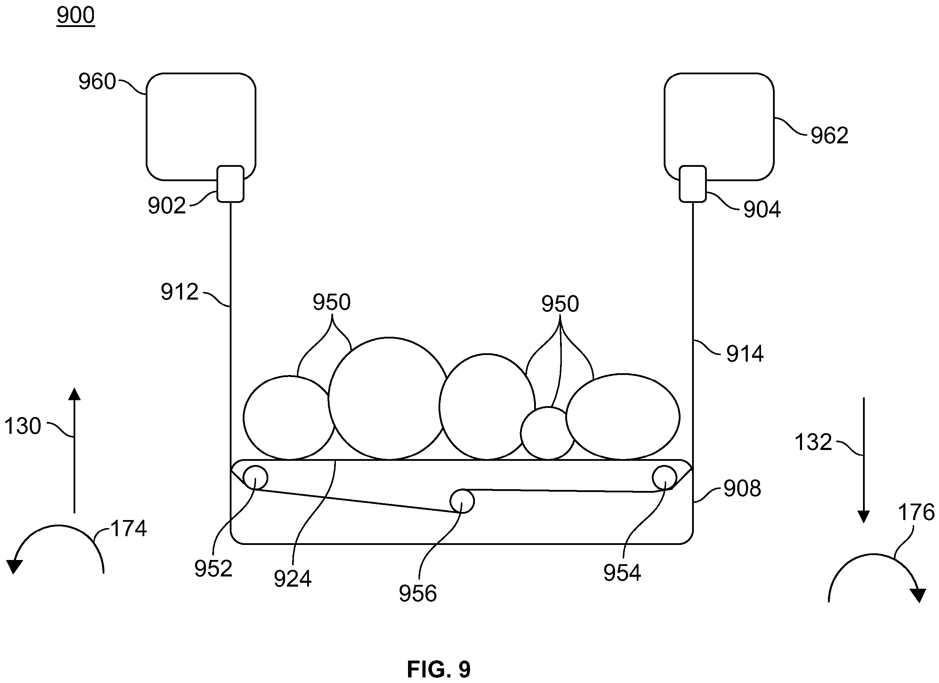

Figure 8 illustrates a flowchart 800 of a method for controlling operation of a lift system 900, and Figure 9 illustrates a front view of one example of the lift system 900. Referring to Figures 8 and 9, at 802, a first strap 912 is detachably coupled with a first clamp assembly 902, and at 804, a second strap 914 is detachably coupled with a second clamp assembly 904. At 806, the first clamp assembly 902 is coupled with a first structure 960, and at 808, the second clamp assembly 904 is coupled with a second structure 962.

The lift system 900 includes a lift housing 908 and a cover 924 that is coupled with the lift housing 908. The lift housing 908 includes a housing cavity in which a rotating extension component 956 of a spool assembly is positioned. The first strap 912 extends between and is coupled with the first clamp assembly 902 and the rotating extension component 956, and the second strap 914 extends between and is coupled with the second clamp assembly 904 and the rotating extension component 956. The first strap 912 extends around a portion of a first roller 952, and the second strap 914 extends around a portion of a second roller 954.

The rotating extension component 956 is operably coupled with a gear assembly (not shown in Figure 9) that controls operation of the rotating extension component 956. For example, the gear assembly controls a direction of rotation of the rotating extension component 956 and a speed of rotation of the rotating extension component 956.

In one or more examples, the lift system 900 may be used to move one or more objects 950 between one or more different vertical positions. At 810, a determination is made if a lift housing 908 of the lift system 900 needs to move in the first direction 130, such as to move the lift housing 908 and/or the objects 950 in the first direction 130 toward the first and second structures 960, 962. If the lift housing 908 needs to move in the first direction 130, at 812, one or more gears of the gear assembly (not shown) may be actuated to control the rotating extension component 956 to rotate in the first direction of rotation 174. For example, rotating the rotating extension component 956 in the first direction of rotation 174 causes portions of the first and second straps 912, 914 to wrap around an outer surface of the rotating extension component 956 thereby causing a length of the first and second straps 912, 914 to decrease or shorten. The rotating extension component 956 of the spool assembly may be rotated in the first direction of rotation 174 and the lift housing 908 and/or the objects 950 may be moved in the first direction 130, such as to a determined position, a determined elevation, determined height, or the like, and flow of the method may proceed toward 814.

Returning to 810, if the lift housing 908 does not need to be moved in the first direction 130, a determination is made if the lift housing 908 needs to move in the second direction 132, such as to move the objects 950 and/or the lift housing 908 in the second direction 132 away from the first and second structures 960, 962. If the lift housing 908 needs to move in the second direction 132, at 816, the one or more gears of the gear assembly may be actuated to control the rotating extension component 956 to rotate in the second direction of rotation 176. Rotating the rotating extension component 956 in the second direction of rotation 176 causes portions of the first and second straps 912, 914 to unwrap from the outer surface of the rotating extension component 956, thereby causing the length of the first and second straps 912, 914 to increase or lengthen. The rotating extension component 956 may be rotated in the second direction of rotation 176 and the lift housing 908 (and/or the objects 950) may be moved in the second direction 132, such as to a determined position, a determined elevation, a determined height, or the like, and flow of the method may proceed toward 818 and 820.

In one example, the objects 950 may be disposed on the lift housing 908, and the lift housing 908 may be moved in the first direction 130, such as to move the objects 950 to an installed position, mating position, or the like. In another example, the objects 950 may be positioned at an elevated position (e.g., proximate the first and second structures 960, 962 and above the lift housing 908) and the lift housing 908 may be moved in the first direction 130, such as to be used to retrieve and/or lower the objects 950 from the elevated position. For example, the lift system 900 may be used to assist with moving the objects 950 from an elevated position to a lowered position.

Returning to 814, if the lift housing 908 does not need to be moved in the second direction 132, flow of the method proceed toward 818 and 820. At 818, the first clamp assembly 902 is decoupled from the first structure 960, and at 820, the second clamp assembly 904 is decoupled from the second structure 962.

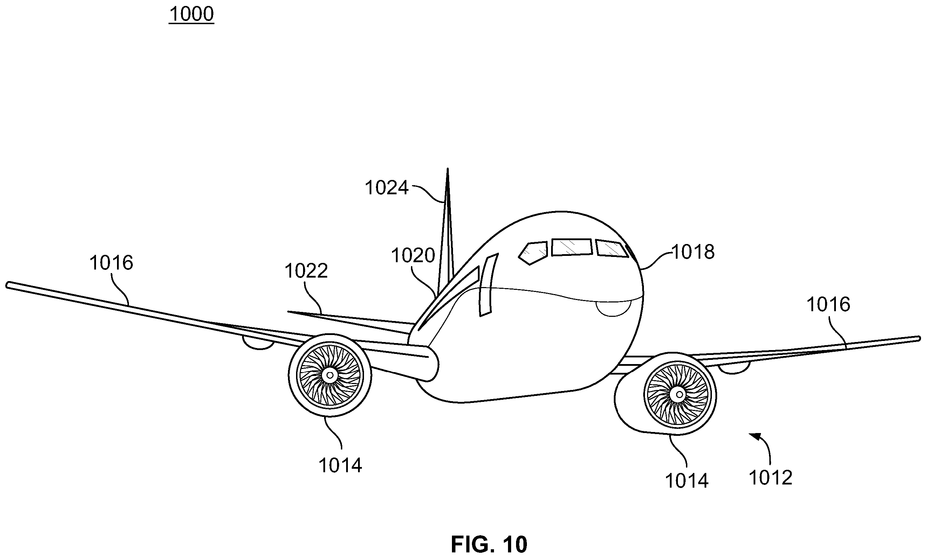

In one or more examples, the first and second structures 960, 962 may be positioned with an aircraft, such as floor beams of the aircraft. For example, Figure 10 illustrates a perspective front view of an aircraft 1000, according to an example of the present disclosure. The aircraft 1000 includes a propulsion system 1012 that may include two turbofan engines 1014, for example. Optionally, the propulsion system 1012 may include more engines 1014 than shown. The engines 1014 are carried by wings 1016 of the aircraft 1000. In other examples, the engines 1014 may be carried by a fuselage 1018 and/or an empennage 1020. The empennage 1020 may also support horizontal stabilizers 1022 and a vertical stabilizer 1024.

In one or more examples, the first and second structures may be disposed within the fuselage 1018 of the aircraft 1000, and the lift system 900 may be used to move plural objects 950 between different vertical positions. For example, the objects 950 may represent wire bundles that may extend along a portion of a length of the fuselage 1018 at a location within the fuselage 1018. In one example, the wire bundles may extend lengths that are about 3.05 m (10 feet (ft)), about 4.57 m (15ft), about 7.62 m (25ft), about 12.19 m (40ft), or the like. Additionally, the wire bundles 950 may weight about 68.04 kg (150 pounds (lbs.)), about 226.80 kg (500lbs), about 340.19 kg (750lbs), about 453.59 kg (1000lbs), about 680.39 (1500lbs), or the like. The wire bundles 950 may need to be moved to elevated positions where the wire bundles may be installed within the fuselage 1018. For example, the wire bundles 950 may be installed within the aircraft proximate to floor beams or another surface of the aircraft. The lift system 900 may be used to move the objects 950 towards and/or away from the surfaces of the aircraft.

Optionally, the lift system 900 may be used to move any alternative object within an aircraft, within another vehicle (e.g., automobiles, buses, locomotives, train cars, watercraft, spacecraft, etc.), within a stationary structure (e.g., a building, warehouse, a residence, etc.). Optionally, the lift system 900 may be used to move any object to one or more different vertical positions.

In one or more examples, two or more lift systems may be used to move the wire bundles between the elevated install positions and lowered positions of the wire bundles. For example, the wire bundles may extend a length of about 7.62 m (25ft), and a lift system may be positioned at about every 1.52 m (5ft) of the length of the wire bundle. Each of the five lift systems that may be used to move the wire bundles between the lowered position and the installed elevated positions may be independently operated. For example, an operator may actuate the gear shaft of a first lift system to move the first lift system in the first direction to a determined elevation, the operator may subsequently actuate the gear shaft of a second lift system to move the second lift system in the first direction to the determined elevation, the operator may subsequently actuate the gear shaft of a third lift system to move the third lift system in the first direction, and the like. For example, one or more operators may lift the wire bundles in stages and/or phases. As another example, five operators may separately actuate each of the gear shafts of the five lift systems. Optionally, two or more lift systems may be used in any alternative manner.

As described herein, examples of the present disclosure provide lift systems and methods for moving objects, such as wire bundles within an aircraft, to different elevations. The lift systems may include clamp assemblies that may be detachably coupled with one or more structures, surfaces, components, or the like, of the aircraft. One or more straps may extend between the clamp assemblies and a lift housing. The lift housing may include a spool assembly having a rotating component to which the one or more straps are coupled. The rotating component may be controlled by a gear assembly to rotate in a first direction of rotation or a second direction of rotation. The objects may be placed on a top surface of the lift housing, and the lift housing may be moved in a first direction (e.g., toward the clamp assemblies) responsive to the rotating component rotating in the first direction of rotation, or the lift housing may be moved in a second direction (e.g., away from the clamp assemblies) responsive to the rotating component rotating in the second direction of rotation.

Examples of the present disclosure provide safer working conditions for operators to move objects (e.g., wire bundles) to different elevated positions so that the wire bundles may be installed and/or removed from an aircraft. For example, the present disclosure provides a lift system that reduces at least some of the physical and manual actions required for the operators to install the wire bundles, that reduces a risk of physical and/or ergonomic pain to the operators, that allows a reduced number of operators to install wire bundles, and that allows operators that otherwise would not be physically capable of manually lifting the wire bundles to complete the wire bundle installation process.

Further, the disclosure comprises examples according to the following clauses:
Clause 1: a lift system, comprising:
   a first clamp assembly configured to be operably coupled with a first structure;
   a second clamp assembly configured to be operably coupled with a second structure;
   a gear assembly comprising one or more gears disposed within a gear housing;
   a lift housing comprising plural surfaces defining a housing cavity, the lift housing including a spool assembly disposed within the housing cavity, wherein the spool assembly is configured to be operably coupled with the one or more gears of the gear assembly, wherein the gear assembly is configured to control a direction of rotation of the spool assembly;
   a first strap extending between a first end and a second end, the first end of the first strap operably coupled with the first clamp assembly, the second end of the first trap operably coupled with the spool assembly; and
   a second strap extending between a third end and a fourth end, the third end of the second strap operably coupled with the second clamp assembly, the fourth end of the second strap operably coupled with the spool assembly,
   wherein the lift housing is configured to move in a first direction responsive to the spool assembly rotating in a first direction of rotation, and the lift housing is configured to move in a second direction responsive to the spool assembly rotating in a second direction of rotation.
Clause 2: the lift system of clause 1, wherein the lift housing is configured to move an object operably coupled with the lift housing in one or more of the first direction or the second direction.
Clause 3: the lift system of clauses 1 or 2, wherein the spool assembly includes a rotating extension component configured to rotate in the first direction of rotation or the second direction of rotation, wherein the second end of the first strap and the fourth end of the second strap are operably coupled with the rotating extension component.
Clause 4: the lift system of clause 3, wherein a portion of the first strap and a portion of the second strap are configured to wrap around an outer surface of the rotating extension component responsive to the spool assembly rotating in the first direction of rotation.
Clause 5: the lift system of clause 3 or 4, wherein a portion of the first strap and a portion of the second strap are configured to unwrap and move away from the rotating extension component responsive to the spool assembly rotating in the second direction of rotation.
Clause 6: the lift system of any of clauses 1-5, wherein the gear assembly includes an attachment portion extending a distance away from the gear housing, wherein the one or more gears are configured to be actuated responsive to actuation of the attachment portion.
Clause 7: the lift system of any of clauses 1-6, wherein the gear assembly is configured to control a speed of rotation of the spool assembly.
Clause 8: the lift system of any of clauses 1-7, wherein the lift housing includes a cover configured to extend over at least a portion of the housing cavity.
Clause 9: the lift system of any of clauses 1-8, wherein the lift housing extends between a first end and a second end, the lift housing including a first roller positioned proximate the first end of the lift housing and a second roller positioned proximate the second end of the lift housing, wherein the first strap is configured to extend around a portion of the first roller of the lift housing between the first and second ends of the first strap, and the second strap is configured to extend around a portion of the second roller between the third and fourth ends of the second strap.
Clause 10: the lift system of any of clauses 1-9, wherein the first end of the first strap is detachably coupled with the first clamp assembly, and the third end of the second strap is detachably coupled with the second clamp assembly.
Clause 11: the lift system of any of clauses 1-10, wherein the first structure and the second structure are positioned within an aircraft, wherein the lift housing is configured to move in the first direction toward a surface of the aircraft or in the second direction away from the surface of the aircraft.
Clause 12: the lift system of any of clauses 1-11, wherein the lift housing is configured to move an object one or more of towards or away from the surface of the aircraft.
Clause 13: a method, comprising:
   moving a lift housing of a lift system in a first direction responsive to rotating a spool assembly in a first direction of rotation, the spool assembly configured to be disposed within the lift housing, the lift system including a first strap extending between a first end operably coupled with a first clamp assembly and a second end operably coupled with the spool assembly and a second strap extending between a third end operably coupled with a second clamp assembly and a fourth operably coupled with the spool assembly; and
   moving the lift housing of the lift assembly in a second direction responsive to rotating the spool assembly in a second direction of rotation.
Clause 14: the method of clause 13, further comprising controlling one or more of a direction of rotation of the spool assembly or a speed of rotation of the spool assembly via a gear assembly operably coupled with the spool assembly.
Clause 15: the method of clauses 13 or 14, further comprising rotating a rotating extension component of the spool assembly in the first direction of rotation or the second direction of rotation, wherein the second end of the first strap and the fourth end of the second strap are operably coupled with the rotating extension component.
Clause 16: the method of clause 15, further comprising wrapping a portion of the first strap and wrapping a portion of the second strap around an outer surface of the rotating extension member component responsive to the spool assembly rotating in the first direction of rotation.
Clause 17, the method of clause 15 or 16, further comprising unwrapping a portion of the first strap and unwrapping a portion of the second strap from the outer surface of the rotating extension component responsive to the spool assembly rotating in the second direction of rotation.
Clause 18: the method of any of clauses 13-17, further comprising:
   detachably coupling the first end of the first strap with a first clamp assembly;
   detachably coupling the third end of the second strap with a second clamp assembly;
Clause 19: the method of clause 18, further comprising:
   coupling the first clamp assembly with a first structure of an aircraft;
   coupling the second clamp assembly with a second structure of an aircraft; and
   one or more of moving an object toward a surface of the aircraft responsive to the lift housing moving in the first direction or moving the object away from the surface of the aircraft responsive to the lift housing moving in the second direction.
Clause 20: a lift system, comprising:
   a lift housing comprising one or more surfaces defining a housing cavity;
   a spool assembly configured to be disposed within the housing cavity of the lift housing, the spool assembly comprising a rotating extension component configured to rotate in a first direction of rotation or a second direction of rotation, the spool assembly operably coupled with a gear assembly configured to control one or more of a direction of rotation of the rotating extension member or a speed of rotation of the rotating extension member;
   a first strap extending between a first end operably coupled with a first clamp assembly and a second end operably coupled with the rotating extension component of the spool assembly; and
   a second strap extending between a third end operably coupled with a second clamp assembly and a fourth end operably coupled with the rotating extension component of the spool assembly,
   wherein the first clamp assembly is configured to be operably coupled with a first structure and the second clamp assembly is configured to be operably coupled with a second structure,
   wherein the lift housing is configured to move in a first direction toward the first and second structures responsive to the rotating extension component of the spool assembly rotating in the first direction of rotation, wherein a portion of the first strap and a portion of the second strap are configured to wrap around an outer surface of the rotating extension component responsive to the rotating extension component rotating in the first direction of rotation, and/or
   wherein the lift housing is configured to move in a second direction away from the first and second structures responsive to the rotating extension component of the spool assembly rotating in the second direction of rotation, wherein the portion of the first strap and the portion of the second strap are configured to unwrap from the rotating extension component responsive to the rotating extension component rotating in the second direction of rotation.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art.

## Claims

1. A lift system (100), comprising:
a first clamp assembly (102) configured to be operably coupled with a first structure (960);
a second clamp assembly (104) configured to be operably coupled with a second structure (962);
a gear assembly (106) comprising one or more gears disposed within a gear housing (126);
a lift housing (108) comprising plural surfaces defining a housing cavity (140), the lift housing (108) including a spool assembly (110) disposed within the housing cavity (140), wherein the spool assembly (110) is configured to be operably coupled with the one or more gears of the gear assembly (106), wherein the gear assembly (106) is configured to control a direction of rotation of the spool assembly (110);
a first strap (112) extending between a first end (116) and a second end (118), the first end (116) of the first strap (112) operably coupled with the first clamp assembly (102), the second end (118) of the first trap (112) operably coupled with the spool assembly (110); and
a second strap (114) extending between a third end (120) and a fourth end (122), the third end (120) of the second strap (114) operably coupled with the second clamp assembly (104), the fourth end (122) of the second strap (114) operably coupled with the spool assembly (110),
wherein the lift housing (108) is configured to move in a first direction (130) responsive to the spool assembly (110) rotating in a first direction of rotation (174), and the lift housing (108) is configured to move in a second direction (132) responsive to the spool assembly (110) rotating in a second direction of rotation (176).

2. The lift system (100) of claim 1, wherein the lift housing (108) is configured to move an object (950) operably coupled with the lift housing (108) in one or more of the first direction (130) or the second direction (132).

3. The lift system (100) of claim 1 or 2, wherein the spool assembly (110) includes a rotating extension component (156) configured to rotate in the first direction of rotation (174) or the second direction of rotation (176), wherein the second end (118) of the first strap (112) and the fourth end (122) of the second strap (114) are operably coupled with the rotating extension component (156).

4. The lift system (100) of claim 3, wherein:
a portion of the first strap (112) and a portion of the second strap (114) are configured to wrap around an outer surface of the rotating extension component (156) responsive to the spool assembly (110) rotating in the first direction of rotation (174); and/or
a portion of the first strap (112) and a portion of the second strap (114) are configured to unwrap and move away from the rotating extension component (156) responsive to the spool assembly (110) rotating in the second direction of rotation (176).

5. The lift system (100) of any one of claims 1-4, wherein the gear assembly (106):
includes an attachment portion (128) extending a distance away from the gear housing (126), wherein the one or more gears are configured to be actuated responsive to actuation of the attachment portion (128); and/or
is configured to control a speed of rotation of the spool assembly (110).

6. The lift system (100) of any one of claims 1-5, wherein the lift housing (108):
includes a cover (124) configured to extend over at least a portion of the housing cavity (140); and/or
extends between a first end (142) and a second end (144), the lift housing (108) including a first roller (152) positioned proximate the first end (142) of the lift housing (108) and a second roller (154) positioned proximate the second end (144) of the lift housing (108), wherein the first strap (112) is configured to extend around a portion of the first roller (152) of the lift housing (108) between the first and second ends (116), (118) of the first strap (112), and the second strap (114) is configured to extend around a portion of the second roller (154) between the third and fourth ends (120), (122) of the second strap (114).

7. The lift system (100) of any one of claims 1-6, wherein the first end (116) of the first strap (112) is detachably coupled with the first clamp assembly (102), and the third end (120) of the second strap (114) is detachably coupled with the second clamp assembly (104).

8. The lift system (100) of any one of claims 1-7, wherein the first structure (960) and the second structure (962) are positioned within an aircraft (1000), wherein the lift housing (108) is configured to move in the first direction (130) toward a surface of the aircraft (1000) or in the second direction (132) away from the surface of the aircraft (1000), preferably wherein:
the lift housing (108) is configured to move an object (950) one or more of towards or away from the surface of the aircraft (1000)..

9. A method, comprising:
moving a lift housing (108) of a lift system (100) in a first direction (130) responsive to rotating a spool assembly (110) in a first direction of rotation (174), the spool assembly (110) configured to be disposed within the lift housing (108), the lift system (100) including a first strap (112) extending between a first end (116) operably coupled with a first clamp assembly (102) and a second end (118) operably coupled with the spool assembly (110) and a second strap (114) extending between a third end (120) operably coupled with a second clamp assembly (104) and a fourth operably coupled with the spool assembly (110); and
moving the lift housing (108) of the lift assembly (100) in a second direction (132) responsive to rotating the spool assembly (110) in a second direction of rotation (176).

10. The method of claim 9, further comprising controlling one or more of a direction of rotation of the spool assembly (110) or a speed of rotation of the spool assembly (110) via a gear assembly (106) operably coupled with the spool assembly (110).

11. The method of claim 9 or 10, further comprising rotating a rotating extension component (156) of the spool assembly (110) in the first direction of rotation (174) or the second direction of rotation (176), wherein the second end (118) of the first strap (112) and the fourth end (122) of the second strap (114) are operably coupled with the rotating extension component (156).

12. The method of claim 11, further comprising:
wrapping a portion of the first strap (112) and wrapping a portion of the second strap (114) around an outer surface of the rotating extension member component (156) responsive to the spool assembly (110) rotating in the first direction of rotation (174); and/or
unwrapping a portion of the first strap (112) and unwrapping a portion of the second strap (114) from the outer surface of the rotating extension component (156) responsive to the spool assembly (110) rotating in the second direction of rotation (176).

13. The method of any one of claims 9-12, further comprising:
detachably coupling the first end (116) of the first strap (112) with a first clamp assembly (102);
detachably coupling the third end (120) of the second strap (114) with a second clamp assembly (104);

14. The method of claim 13, further comprising:
coupling the first clamp assembly (102) with a first structure (960) of an aircraft (1000);
coupling the second clamp assembly (104) with a second structure (962) of an aircraft (1000); and
one or more of moving an object (950) toward a surface of the aircraft (1000) responsive to the lift housing (108) moving in the first direction (130) or moving the object (950) away from the surface of the aircraft (1000) responsive to the lift housing (108) moving in the second direction (132).

15. A lift system (100), comprising:
a lift housing (108) comprising one or more surfaces defining a housing cavity (140);
a spool assembly (110) configured to be disposed within the housing cavity (140) of the lift housing (108), the spool assembly (110) comprising a rotating extension component (156) configured to rotate in a first direction of rotation (174) or a second direction of rotation (176), the spool assembly (110) operably coupled with a gear assembly (106) configured to control one or more of a direction of rotation of the rotating extension member (156) or a speed of rotation of the rotating extension member (156);
a first strap (112) extending between a first end (116) operably coupled with a first clamp assembly (102) and a second end (118) operably coupled with the rotating extension component (156) of the spool assembly (110); and
a second strap (114) extending between a third end (120) operably coupled with a second clamp assembly (104) and a fourth end (122) operably coupled with the rotating extension component (156) of the spool assembly (110),
wherein the first clamp assembly (102) is configured to be operably coupled with a first structure (960) and the second clamp assembly (104) is configured to be operably coupled with a second structure (962),
wherein the lift housing (108) is configured to move in a first direction (130) toward the first and second structures (960), (962) responsive to the rotating extension component (156) of the spool assembly (110) rotating in the first direction of rotation (174), wherein a portion of the first strap (112) and a portion of the second strap (114) are configured to wrap around an outer surface of the rotating extension component (156) responsive to the rotating extension component (156) rotating in the first direction of rotation (174), and
wherein the lift housing (108) is configured to move in a second direction (132) away from the first and second structures (960), (962) responsive to the rotating extension component (156) of the spool assembly (110) rotating in the second direction of rotation (176), wherein the portion of the first strap (112) and the portion of the second strap (114) are configured to unwrap from the rotating extension component responsive to the rotating extension component (156) rotating in the second direction of rotation (176).
